# EUROPÄISCHE PATENTSCHRIFT

(11) **EP 2 054 448 B1**
(45) Veröffentlichungstag und Bekanntmachung des Hinweises auf die Patenterteilung: **22.12.2010**
(21) Anmeldenummer: 07786181.3
(22) Anmeldetag: 19.07.2007
(51) Int. Cl.: C08F 4/02, C08F 2/34, C08F 4/659, B01J 21/18, B01J 32/00

(54) **VERFAHREN ZUR HERSTELLUNG VON KOHLENSTOFFNANORÖHRCHEN-POLYMER-MISCHUNGEN MITTELS GASPHASENPOLYMERISATION**
PROCESS FOR PRODUCING CARBON NANOTUBE-POLYMER MIXTURES BY MEANS OF GAS-PHASE POLYMERIZATION
PROCÉDÉ DE FABRICATION DE MÉLANGES NANOTUBES DE CARBONE-POLYMÈRE PAR POLYMÉRISATION EN PHASE GAZEUSE

(30) Priorität: 01.08.2006 DE 102006035773
(43) Veröffentlichungstag der Anmeldung: 06.05.2009
(73) Patentinhaber: Bayer Technology Services GmbH, 51368 Leverkusen (DE)
(72) Erfinder: WOLF, Aurel, 42489 Wülfrath (DE); BUCHHOLZ, Sigurd, 50767 Köln (DE); MICHELE, Volker, 51065 Köln (DE); MLECZKO, Leslaw, 41542 Dormagen (DE); RUDOLF, Reiner, 51373 Leverkusen (DE)
(86) Internationale Anmeldenummer: PCT/EP2007/006409
(87) Internationale Veröffentlichungsnummer: WO 2008/014894

(56) Entgegenhaltungen:
- WO-A-2005/012170
- US-A1- 2006 057 055
- DATABASE WPI Week 200649 Derwent Publications Ltd., London, GB; AN 2006-476117 XP002461011 & KR 2005 060 160 A (KOREA INST SCI & TECHNOLOGY) 22. Juni 2005 (2005-06-22)

## Beschreibung

Die Erfindung betrifft ein neues Verfahren zur Herstellung von Polymer- Kohlenstoffnanoröhrchen-Mischungen mittels Gasphasenpolymerisation und in einer besonderen Ausführungsform des Verfahrens anschließende Dispergierung in einem Kohlenstoffnanoröhrchen-Polymer-Composite und insbesondere homogene Kohlenstoffnanoröhrchen-Polymer-Mischungen und Kohlenstoffnanoröhrchen-Polymer-Composites durch eine in-situ Gasphasenpolymerisation von Ethylen, Propylen, Buten, Butadien, Isopren und/oder Norbornen in Gegenwart von auf den Kohlenstoffnanoröhrchen geträgerten Katalysatoren bei Temperaturen im Bereich von 0 bis 300°C zu vorgenannten Kohlenstoffnanoröhrchen-Polymer-Mischungen bzw. Kohlenstoffnanoröhrchen-Kautschuk-Mischungen.

Unter Kohlenstoffnanoröhrchen (CNT) werden im Rahmen dieser Erfindung hauptsächlich zylinderförmige Kohlenstoffröhren mit einem Durchmesser von 3 bis 150 nm, bevorzugt 3 bis 80 nm verstanden, die Länge beträgt ein Vielfaches, mindestens 100-faches, des Durchmessers. Diese Röhrchen bestehen aus Lagen geordneter Kohlenstoffatome und weisen einen in der Morphologie unterschiedlichen Kern auf. Diese Kohlenstoffnanoröhrchen werden in der Literatur beispielsweise auch als "carbon fibrils" oder "hollow carbon fibres" bezeichnet. Die beschriebenen Kohlenstoffnanoröhrchen haben aufgrund ihrer Dimensionen und ihrer besonderen Eigenschaften eine technische Bedeutung für die Herstellung von Kompositmaterialien. Wesentliche weitere Möglichkeiten liegen in Elektronik-, Energie- und weiteren Anwendungen.

Durch Einbau von nano-Füllstoffen lassen sich anwendungstechnische Eigenschaften von Polymeren deutlich verbessern. Nach Walter et. al., Macromol. Sci., 1999, A 36, 1613, lassen sich Eigenschaftsverbesserungen schon bei sehr niedrigen nano-Füllstoffgehalten realisieren. Die Herstellung derartiger Nano-Füllstoff/Polymer-Mischungen lassen sich bspw. über Schmelzeeintragung, Eintragung über einem Polymerauflösungsvorgang oder über eine in-situ Polymerisation erreichen. Die letztere Methode bringt den Vorteil, dass nach der Polymerisation kein zusätzlicher Arbeitsvorgang zur Herstellung der Füllstoff/Polymer-Mischung notwendig ist.

Die Herstellung von Kohlenstoffnanoröhrchen/Polyolefin- bzw. von Kohlenstoffnanoröhrchen /Polymere auf Basis von Diolefinen-Mischungen ist in der wissenschaftlichen und technischen Literatur bekannt.

Wiemann et. al., Conference, IUPAC-Symposium Macro, 2004, Paris, sowie Bonduel et. al., Chem. Comm., 2005, 781-783, beschreiben die Herstellung von Kohlenstoffnanoröhrchen /Polypropylen-Mischungen mittels in-situ Polymerisation in Anwesenheit von Kohlenstoffnanoröhrchen. Bei der Polymerisation handelt es sich um eine Lösungspolymerisation, d.h. die Polymerisation wird in einem Lösungsmittel durchgeführt, wobei Katalysator (Zr-Metallocen) sowie Promotor (MAO) darin gelöst wurden. Diese Methode besitzt den Nachteil, dass eine energieintensive Entfernung des Lösungsmittels notwendig ist.

In WO 99/23287 A1 bzw. WO 01/10779 A1 wird die Herstellung von starren, sich durchdringenden Netzwerken aus Kohlenstoffnanoröhrchen und Polymeren durch in-situ Polymerisation beansprucht. Die hier beschriebene in-situ Polymerisation kann sowohl durch Ziegler-Natta-Katalysatoren, durch Metallocene als auch durch radikalische Initiatoren katalysiert bzw. gestartet werden. Bspw. wird die Polymerisation von Ethylen an auf Kohlenstoffnanoröhrchen geträgerten TiCl₄/MAO-Katalysatoren durchgeführt, während die Propylenpolymersiation an einem auf Kohlenstoffnanoröhrchen geträgerten Zirconocen/MAO-Katalysator erfolgt. Während das erste Beispiel eine klassische Gasphasenpolymerisation darstellt, wird bei dem zweiten Beispiel das Propylen kondensiert bzw. eingefroren und anschließend setzt durch Auftauen eine "echte" Lösungspolymerisation ein. Diese Verfahren hat den Nachteil, dass keine homogene Mischungen aus Kohlenstoffnanoröhrchen und Polymer entstehen, sondern nur starre, sich lediglich teilweise durchdringende Netzwerke aus Polymer und Kohlenstoffnanoröhrchen. Genauer gesagt erfolgt die Polymerisation hauptsächlich an den Oberfläche der Kohlenstoflhanoröhrchen -Agglomerate und es findet keine Dispergierung der Kohlenstoffnanoröhrchen innerhalb der Polymermatrix durch die fortschreitende Polymerisation statt. Dies äußert sich schon durch die beschriebene graue bzw. weiße Farbe der Kohlenstoffnanoröhrchen /Polymer-Mischungen. Als Ursache könnte die ungeeignete Auftragung der Katalysatoren auf die Kohlenstoffnanoröhrchen betrachtet werden. Durch Imprägnierung werden die äußeren Oberfläche der Kohlenstoffnanoröhrchen-Partikeln mit Katalysator beladen, gleichzeitig ist der Katalysator nur durch lose physikalische Kräfte an die Kohlenstoffnanoröhrchen gebunden. Dadurch ist die Herstellung von homogenen Mischungen aus Polymer/ Kohlenstoffnanoröhrchen nicht möglich. Es entstehen nur die beanspruchten starren, "sich durchdringenden" Netzwerke.

In WO 95/07316 A1 ist die Herstellung von Kohlenstoffnanoröhrchen/Kautschuk-Mischungen durch Compoundierung beschrieben. Diese Mischungen zeigen eine inhomogene Verteilung der Kohlenstoffnanoröhrchen im Polymer, so dass immer noch "ungelöste" Kohlenstoffnanoröhrchen-Bündel von > 1 µm gefunden werden.

Die WO 05/012170 beschreibt die Herstellung von Polyethylen-Kohlenstoffnanoröhrchen durch Polymerisation von Ethylen an Kohlenstoffnanoröhrchen auf denen ein Metallocenkatalysator befindlich ist. Die vorgenannte Polymerisation findet in der Lösung statt.

Die US 2006/0057055 A1 beschreibt Verfahren zur "in-situ-Polymerisation" auf insbesondere Single-Wall-Carbon-Nano-Tubes, wobei diese in "Emulsion" oder "Mikro-Emulsion" ausgeführt werden.

Ebenso beschreibt die KR 2005/060160 A Verfahren zur Polymerisation an Kohlenstoffmaterialien. Eine Ausführung der Polymerisation in der Gasphase wird aber nicht offenbart.

Die wenigen bis jetzt in der wissenschaftlichen und technischen Literatur bekannten Beispiele für die Herstellung homogener Kohlenstoffnanoröhrchen-Polyolefin- bzw. Kohlenstoffnanoröhrchen-Kautschuk-Mischungen zeichnen sich durch eine geringe Qualität der Mischungen aus bzw. es handelt sich um Verfahren die nicht in einer großtechnischen Produktion überführbar sind.

Die Aufgabe der vorliegenden Erfindung bestand darin, ein Verfahren bereitzustellen, welches die Herstellung von Kohlenstoffnanoröhrchen-Polyolefin- bzw. Kohlenstoffnanoröhrchen-Kautschuk-Mischungen mittels in-situ Gasphasenpolymerisation ermöglicht. Insbesondere sollte eine breit anwendbare Methode gefunden werden, welche die Bildung homogener Mischungen aus Kohlenstoffnanoröhrchen und Polymer sicherstellt, sowie potentiell problematische bzw. technisch aufwendige Arten der Reaktionsführung sowie der Aufarbeitung vermeidet. Gleichzeitig sollte das Verfahren Vorteile hinsichtlich der Raum/Zeit-Ausbeute, der Handhabbarkeit, der Ökonomie und Ökologie im technischen Maßstab bringen.

Überraschenderweise wurde nun gefunden, dass man homogene Kohlenstoffnanoröhrchen-Polymer-Mischungen bzw. Kohlenstoffnanoröhrchen-Kautschuk-Mischungen durch eine Gasphasenpolymerisation mit Hilfe von Kohlenstoffnanoröhrchen geträgerten Polymerisations-Katalysatoren herstellen kann.

Gegenstand der Erfindung ist somit ein Verfahren zur Herstellung von homogenen Kohlenstoffnanoröhrchen-Polymer- bzw. Kohlenstoffnanoröhrchen-Kautschuk-Mischungen gemäß Anspruch 1.

Die im erfindungsgemäßen Verfahren als Katalysatorträger bzw. als Füllstoff eingesetzten Kohlenstoffnanoröhrchen werden i. a. durch eine Abscheidung von kohlenstoffhaltigen gasförmigen Verbindungen aus der Gasphase an metallhaltigen Katalysatoren hergestellt. Als katalytische Metallkomponenten kommen eine Reihe von Übergangsmetalle wie z.B. Nickel, Eisen, Molybdän, Kobalt, Mangan, Kupfer, Chrom, Vanadium, Wolfram bzw. deren binäre, tertiäre, quaternäre usw. Mischungen wie bspw. in WO 2006050903 A2 beschrieben in Frage.

Üblicherweise werden die auf Kohlenstoffnanoröhrchen geträgerten Katalysatoren (CNT-Katalysatoren) durch Zugabe des in einem trockenen Lösungsmittel, bspw. Toluol, Benzol, Heptan, Hexan, Cyclohexan gelösten Katalysators zur Kohlenstoffnanoröhrchen-Suspension und die Fixierung des Katalysators an den auf der Kohlenstoffnanoröhrchen-Oberfläche hergestellt. Anschließend wird die Herstellung des geträgerten CNT-Katalysators durch eine Abtrennung des Lösungsmittel, bspw. durch Verdampfen, vervollständigt.

In einer besonderen Ausführungsform des erfindungsgemäßen Verfahrens werden die Kohlenstoffnanoröhrchen physikalisch oder chemisch behandelt. Insbesondere werden die Kohlenstoffnanoröhrchen üblicherweise entweder "gewaschen" oder mittels physikalische oder chemische Behandlung funktionalisiert. Die Wäsche der Kohlenstoffnanoröhrchen erfolgt bevorzugt durch die Einwirkung einer nichtoxidierenden anorganischen Säure, wie bspw. HCl. Durch diese Behandlung werden ungewünschte Verunreinigungen der Kohlenstoffnanoröhrchen aus dem Herstellprozess entfernt. Bei der Funktionalisierung der Kohlenstoffnanoröhrchen handelt es sich ganz bevorzugt, ohne sich darauf zu beschränken, um eine Sauerstoff-Funktionalisierung insbesondere durch Einbau von aciden Gruppen. Dieses kann beispielsweise durch die Einwirkung von flüssigen Oxidationsmitteln bzw. deren Mischungen als auch von gasförmigen Oxidationsmitteln erfolgen. Bevorzugt sind bspw. HNO₃, H₂SO₄, H₂O₂, HClO₄, O₂, O₃, CO₂ usw., besonders bevorzugt HNO₃ oder Mischungen HNO₃ mit H₂SO₄. Die Anzahl der aciden Gruppen lässt sich durch Titration und/oder durch Röntgen-Photoelektronenspektroskopie (XPS) wie beispielsweise in M. Toebes, Carbon, (42), 2004, 307-315 beschrieben, bestimmen und liegt üblicherweise im Bereich von 50-10000 microÄquivalent/g (µäq/g) Kohlenstoffnanoröhrchen, bevorzugt im Bereich von 100-8000 µäq/g Kohlenstoffnanoröhrchen und ganz bevorzugt im Bereich von 250-5000 µäq/g Kohlenstoffnanoröhrchen.

Für die koordinative Polymerisation von Olefinen, zu denen die erfindungsgemäß verwendeten Gase Ethylen, Propylen und Buten gehören, kommen die dem Fachmann bekannten üblichen Polymerisations-Katalysatoren, d. h. Übergangsmetall-Katalysatoren und Ziegler-Natta Katalysatoren in Frage.

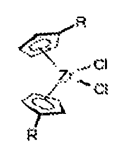

Eine Übersicht über eine Reihe dem Stand der Technik entsprechenden Metallocen-Katalysatoren wird von Kaminsky et. al., Appl. Cat. A.: Gen., 2002, 2001, 47-61 beschrieben. Als typische Polymerisations-Katalysatoren, ohne sich jedoch darauf zu beschränken, kommen bspw. folgende Übergangsmetallkatalysatoren in Frage:
mit R = H, Methyl, Ethyl, Butyl, Neomenthyl usw.
mit M = Zr, Hf und X = C₂H₄, Me₂Si usw. 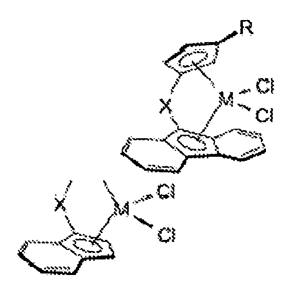
mit M = Zr, Hf, X = Me₂C, Ph₂C, R = H, Ethyl, Butyl usw.

Ferner eignen sich für die erfindungsgemäße Gasphasenpolymerisation der Olefine auch Spätübergangskatalysatoren, wie beispielsweise in Journal of the American Chemical Society (1995), 117(23), 6414-15 beschrieben, mit folgender Struktur:
mit M = Ni, Pd, Co, Fe, L = Methyl, Ethyl, Butyl, R Methyl, Aryl, verbrückt usw.

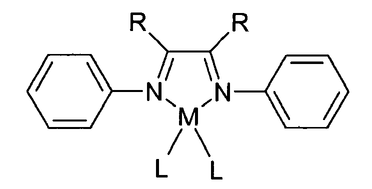

In einer besonderen Ausführungsform des Verfahrens wird neben dem Polymerisations-Katalysator auch mindestens ein Cokatalysator eingesetzt.

Als Cokatalysator für die o. g. Katalysatoren wird üblicherweise Methylalumoxan (MAO) eingesetzt. Prinzipiell eignen sich als Cokatalysator aber auch andere Aluminium-Verbindungen (Al-Verbindungen) insbesondere Aluminiumalkyle wie z.B. Trimethylaluminium, Triisobutylaluminium, die ggf. durch eine in-situ Teilhydrolyse aktiviert werden können. Bei den erfindungsgemäßen Gasphasenpolymerisationen wird üblicherweise im Vergleich zum Katalysator ein Überschuss an Cokatalysator eingestellt. Insbesondere wird üblicherweise ein molares Verhältnis Cokatalysator/Katalysator insbesondere Al-Verbindungen/Metall von 10-500, bevorzugt 10-400 und ganz bevorzugt von 10-300 eingestellt.

Für die Gasphasenpolymerisation und -copolymerisation der Diolefine Butadien, Isopren, Norbonen, werden üblicherweise Ziegler-Natta Katalysatoren auf Basis von Ni, Co, Ti, und Nd eingesetzt. Bevorzugt werden Katalysatoren auf Nd-Basis, da sie Polymere mit hohen cis-Anteil der Doppelbindungen ermöglichen. Üblicherweise können, ohne sich darauf zu beschränken, folgende Neodym-Verbindungen eingesetzt werden:
Nd-versatat (Versatat techn. Mischung aus α,α-disubstituierten C₁₀-Carbonsäuren), Ndneodecanoate, [Nd(C₃H₅)₃]₂, Nd(C₃H₅)₃, Ndcp(C₃H₅)₂, Nd(C₃H₅)₃.

Als Co-katalysatoren werden bei derartigen Systemen bspw. Diisobutylaluminiumhydrid (DIBAH), Triisobutylaluminium und Ethylalumiumsesquichlorid (EASC) eingesetzt.

In einer besonderen Ausführungsform des erfindungsgemäßen Verfahrens ist mindestens ein Cokatalysator ebenfalls auf den Kohlenstoffnanoröhrchen geträgert.

Die Herstellung des auf Kohlenstoffnanoröhrchen geträgerten Katalysatorsystems wird üblicherweise durch eine Reaktion des Kohlenstoffnanoröhrchen-Trägers mit den Cokatalysatoren (insbesondere Al-Verbindungen) gestartet. Dadurch wird eine Fixierung der Cokatalysatoren (insbesondere Al-Verbindungen) auf den Kohlenstoffnanoröhrchen erreicht. Bspw. kann diese Reaktion in Lösung erfolgen, wobei bevorzugt trockene, unpolare Lösungsmittel wie z.B. Toluol, Benzol, Heptan, Hexan oder Cyclohexan oder Mischungen davon eingesetzt werden. Die Reaktion wird üblicherweise in einem Reaktionsapparat durchgeführt, der eine intensive Mischung der Lösung und der Kohlenstoffnanoröhrchen, die üblicherweise dispergiert oder sogar als Agglomerate vorliegen können, gewährleistet. Die Mischung kann mittels Rührer aber auch mittels Dispergierung mit Düsen oder Strahlen erfolgen. Alternativ kann die Mischenergie in beliebiger Form, wie z.B. Ultraschall, eingebracht werden. Diese Reaktion kann bei Raumtemperatur aber auch bei erhöhten Temperaturen durchgeführt werden. Bevorzugt wird die Reaktion bei Temperaturen von 10-100°C und ganz bevorzugt bei Temperaturen von 20-60°C durchgeführt. Ist diese Reaktion beendet, so wird durch Zugabe des in einem trockenen Lösungsmittel, bspw. Toluol, Benzol, Heptan, Hexan, Cyclohexan gelösten Polymerisations-Katalysators zur Kohlenstoffnanoröhrchen/Cokatalysator-Suspension die Fixierung des Katalysators an den auf der Kohlenstoffnanoröhrchen-Oberfläche fixierten Cokatalysatoren (insbesondere Al-Verbindungen) durchgeführt. Anschließend wird die Herstellung des geträgerten Katalysators durch eine Abtrennung des Lösungsmittel, bspw. durch Verdampfen, vervollständigt. Als Produkt erhält man einen aktiven, auf Kohlenstoffnanoröhrchen geträgerten Gasphasenpolymerisationskatalysator. Üblicherweise beträgt der Cokatalysatoranteil bezogen auf Gesamtmasse 0,01-15 Gew.% , bevorzugt 0,05-12 Gew.% und ganz bevorzugt 0,1-10 Gew.%. Der Katalysatoranteil liegt im Bereich von 0,001-5 Gew.% und bevorzugt im Bereich von 0,005-3 Gew.%.

Die Polymerisation wird durch Zugabe der gasförmigen Monomeren gemäß Anspruch 1 gestartet.

Die Gasphasenpolymerisation kann in allen für die Gasphasenpolymerisation geeigneten Reaktoren durchgeführt werden. Beispielsweise eignen sich Wirbelschichtreaktoren, Rührkesselreaktoren, Festbettreaktoren usw.

Die Polymerisationstemperatur wird im Grunde von der Kinetik der Polymerisation bestimmt und lediglich durch die apparativen Gegebenheiten (Wärmeübergang) sowie den Schmelzpunkt der Polymere begrenzt. Das Verfahren gemäß Anspruch 1 wird bevorzugt bei Temperaturen im Bereich von 20-200°C ausgerührt. Die Gasphasenpolymerisation wird bei dem höchstmöglichsten Druck durchgeführt, da hohe Partialdrücke von Olefinen zu hohen Produktivitäten führen. Der Reaktionsdruck ergibt sich aus den bei der entsprechenden Reaktionstemperatur sich einstellenden Dampfdruck der Monomere. Beispielsweise ohne sich darauf zu beschränken wird die in-situ Polymerisation von Ethylen bei einer Reaktionsdruck von 1 bar bis zu 200 bar, bevorzugt von 1 bis 100 bar durchgeführt. Die Umsetzung des Monomers aus der Gasphase kann diskontinuierlich erfolgen d.h. der Reaktionsdruck im Reaktor nimmt im Laufe der Reaktion ab. Eine andere Reaktionsführung wird durch eine konstante Nachdosierung des Monomers erreicht. Dadurch wird die in situ-Polymerisation bei einem konstanten Reaktionsdruck durchgeführt. Üblicherweise wird das erfindungsgemäße Verfahren in einem Reaktor unter Durchmischung des Reaktionsmaterial z.B. in einem Rührkessel mit drehenden Rührer durchgeführt.

Der Prozentsatz an Polymer (insbesondere Polyethylen) in der Kohlenstoffnanoröhrchen-Polymer-Mischung bzw. Kohlenstoffnanoröhrchen-Kautschuk-Mischung ist je nach Reaktionszeit und Reaktionsdruck variabel.

Überraschenderweise gelingt die erfindungsgemäße Umsetzung der Monomere an den spezifischen Kohlenstoffnanoröhrchen-Trägerkatalysatoren in ganz vorteilhafter Weise, wobei nur homogen verteilte Kohlenstoffnanoröhrchen-Polymer-Mischungen bzw. Kohlenstoffnanoröhrchen-Kautschuk-Mischungen erhalten werden. Diese Polymer- bzw. Kautschuk-Mischungen besitzen ganz bevorzugt Kohlenstoffnanoröhrchen-Anteile von 0,1-50 Gew.%, besonders bevorzugt von 0,1-30 Gew.%. Derartige Kohlenstoffnanoröhrchen-Polymermischungen bzw. Kohlenstoffnanoröhrchen-Kautschuk-Mischungen können direkt weiterverarbeitet werden, jedoch in bevorzugter Weise können sie auch als Masterbatch, d.h. als konzentrierter Polymer- bzw. Kautschuk-Füller Mischung, die anschließend mit einem zweiten Polymer verschnitten wird, eingesetzt werden. Derartige Kohlenstoffnanoröhrchen-Polymer bzw. Kautschuk-Masterbatch lassen sich mit anderen Polymeren wie z.B. Polyethylen, Polypropylen, Polyethylen-co-styrol, Polybutadien, Polyisopren, Polystyrol-co-acrylnitril, EPDM Polychloropren, Polyethylen-vinylacetate mit den üblichen Methoden, z.B. Lösungsmischung, Schmelzemischung mit Extrudern usw., in Kohlenstoffnanoröhrchen-Polymeren- bzw. Kohlenstoffnanoröhrchen-Kautschuk-Composites hervorragend mischen.

Es gelingt durch die beschriebenen Verfahrensschritte, die Kohlenstoffnanoröhrchen, auch wenn diese ursprünglich in Form von Bündeln oder Agglomeraten vorliegen, voneinander zu trennen und homogen im Polymer zu verteilen.

Der Erfolg der Dispergierung wird üblicherweise mittels Transmission-Elektronen-Mikroskop (TEM) (z.B. Philips/Fei tecnai 20 mit LaB6-Kathode, lxlk CCD-Kamera der Firma TVIPS "F 114T nach Anweisungen des Herstellers) bzw. alternativ mittels Confokaler Laser Scanning Mikroskopie (CLSM) mit Fluoreszenzkontrast (z.B. Confocal Laser Scanning Microscope Leica TCS SP2 nach Anweisungen des Herstellers) bestimmt. Nach beiden Methoden wird die Präsenz bzw. Abwesenheit von schwarzen Partikeln sichtbar, wobei die Abwesenheit von schwarzen Partikeln bedeutet, dass die Kohlenstoffnanoröhrchen vollständig dispergiert vorliegen und keine undispergierten Partikel vorhanden sind. Je nach Anteil an Kohlenstoffnanoröhrchen bzw. Polymer insbesondere Polyethylen können Kohlenstoffnanoröhrchen-Polymer-Mischungen bzw. Kohlenstoffnanoröhrchen-Polymer-Composites mit Schmelztemperaturen im Bereich von 100 bis 180°C bevorzugt 120 bis 150°C und / oder eine Kristallinität von 1 bis 50 % bevorzugt 5 bis 40% produziert werden.

### Beispiele

### Beispiel 1: Wäsche der Kohlenstoffnanoröhrchen

In einem Kolben mit Rührorgan und Kühler wurden 50 g Kohlenstoffnanoröhrchen (Baytubes, hergestellt wie in WO 2006050903 beschrieben) und 1300 mL 37 % HCl vorgelegt. Anschließend wurde 1 h unter Rückfluss gekocht. Nach Abkühlen wurde mit H₂O neutral gewaschen und im Vakuum bei 80°C über Nacht getrocknet. Die Ausbeute an gewaschenen Kohlenstoffnanoröhrchen betrug 98,7 %.

### Beispiel 2: Funktionalisierung der Kohlenstoffnanoröhrchen

In einem Kolben mit Rührorgan und Kühler wurden 30 g CNT und 900 mL 70 % HNO₃ vorgelegt. Anschließend wurde 5 h unter Rückfluss gekocht. Nach Abkühlen wurde mit H₂O neutral gewaschen und im Vakuum über Nacht getrocknet. Die Ausbeute an funktionalisierten Kohlenstoffnanoröhrchen betrug 23,37 g (77,9 %). Die Anzahl der sauren Gruppen wurde mittels Titration bestimmt und beträgt 931 µäq/g COOH/g Kohlenstoffnanoröhrchen.

### Beispiel 3: Herstellung des Katalysators

In einem inertisierten Reaktor mit Rührer, Inertgaszuleitung, Gasblasenzähler, Destillationsbrücke, sowie Dosiereinheit von Flüssigkeiten unter Schutzgas wurden 45 g an Kohlenstoffnanoröhrchen aus Beispiel 1 vorgelegt. Anschließend wurden durch intensive Spülung mit Argon bei 120°C (Ölbad) 1 h lang möglicherweise vorhandene O₂- bzw. H₂O-Spuren entfernt. Nach Abkühlen auf Raumtemperatur wurden über eine vorher mit Inertgas intensiv gespülte Polyethylen-Schlauch-Verbindung zur geschlossenen Zugabe von "getrockneten" Lösungsmitteln/Chemikalien, 30,7 g MAO in Toluol sowie 116 mg (n-Bu-Cp)₂ZrCl₂ (Bu = Butyl, Cp = Cyclopentadienyl) in den Reaktor befördert. Die Kohlenstoffnanoröhrchen-Katalysatorsuspension wurde ca. 5 h intensiv gerührt und anschließend das Lösungsmittel abdestilliert.

### Beispiel 4: In-situ Gasphasenpolymerisation von Ethylen

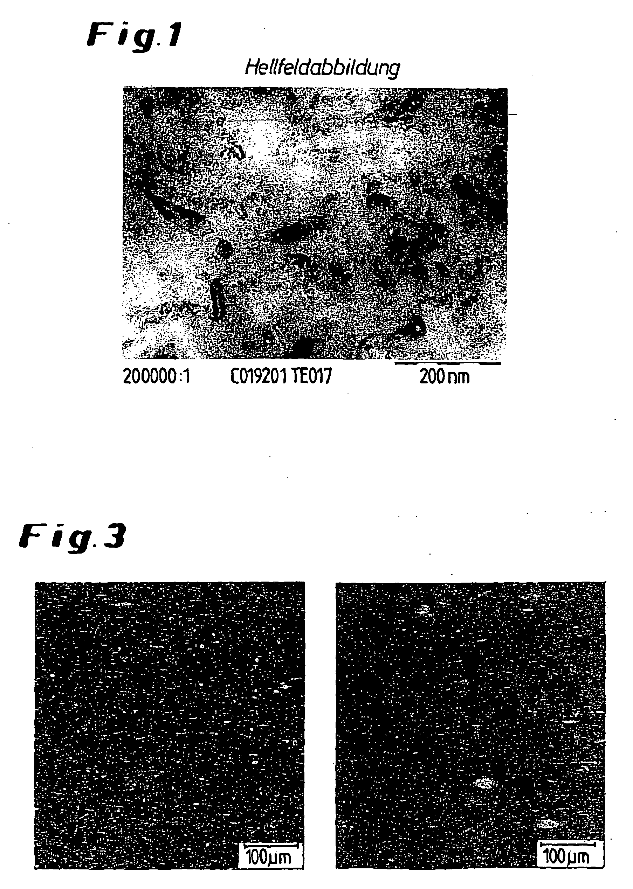

45 g des im Beispiel 3 hergestellten Katalysators wurden in einem druckfesten Stahlautoklaven mit einem langsamdrehenden (300 U/min) Ankerrührer eingeführt und auf eine Reaktionstemperatur von 90°C aufgeheizt. Anschließend wurde durch die Einstellung von 10 bar Ethylen die Gasphasenpolymerisation gestartet. Die Polymerisation wurde bei konstantem Druck durchgeführt, da eine automatische Zugabe des verbrauchten Ethylens über das anlageneigene Regelsystem erfolgte. Nach der Zudosierung von 325 1 Ethylen (372 g Ethylen) wurde die Polymerisation durch Abkühlen abgebrochen. Erhalten wurden 324 g einer Kohlenstoffnanoröhrchen/Polyethylen-Mischung, was einem Massenanteil von 13.9% Kohlenstoffnanoröhrchen bezogen auf Polyethylen entspricht. Der Erfolg der Dispergierung wurde mittels Transmission Elektronen Mikroskopie bestimmt und ist in Abbildung 1 dargestellt. Mittels Differential Scanning Calorimetry (z.B. Mettler Toledo DSC 822^{e} nach Anweisungen des Herstellers) wurde eine Schmelztemperatur von 129,5°C bestimmt. Die Kristallinität der Probe wurde wie beispielsweise in Macromol. Chem. 2001, (202), 2239-2246 beschrieben, berechnet und betrug 39%.

### Abbildung 1 zeigt eine TEM-Aufnahme eines Kohlenstoffnanoröhrchen/Polyethylen-Mischung

### Beispiel 5: Herstellung eines Kohlenstoffnanoröhrchen-Polymeren-Composites aus einem in-situ polymerisierten Kohlenstoffnanoröhrchen-Polyethylen Masterbatch und High Density Polyethylen (HDPE)

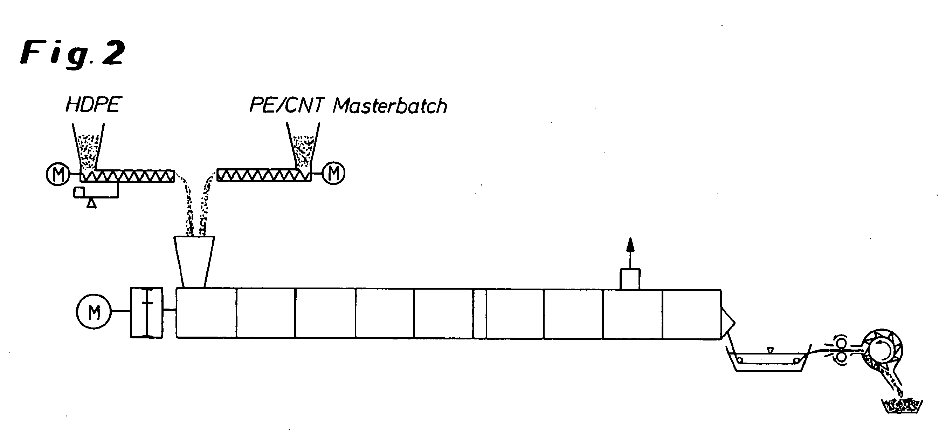

Ein in-situ polymerisierter Kohlenstoffnanoröhrchen/Polyethylen Masterbatch mit 13 Gew.-% Kohlenstoffnanoröhrchen-Anteil wurde in einem gleichläufigen Doppelschneckenextruder in ein HDPE (Lupolen 4261, Fa. Basell) eingearbeitet. Sowohl das HDPE als auch der Kohlenstoffnanoröhrchen-Polyethylen-Masterbatch lagen in Pulverform vor. Es wurden 8 Gew.-% des Masterbatchs und 92 Gew.-% des HDPE über je eine Dosierwaage in der Haupteinzug des Extruders gefördert, so dass die Kohlenstoffnanoröhrchen -Konzentration im Endprodukt 1 Gew.-% betrug. Bei dem verwendeten Extruder handelte es sich um einen ZSK 26Mc von Coperion Werner & Pfleiderer mit einem Länge/Durchmesser-Verhältnis von 36 (vgl. Abb. 2). Der Gesamtdurchsatz betrug 16 kg/h bei einer Drehzahl von 250 min-1. Im Extruder erfolgte die Aufschmelzung des HDPE und des Masterbatch-Polyethylens sowie das distributive und dispersive Mischen der Kohlenstoffnanoröhrchen in die HDPE-Schmelze. Im vorletzten Gehäuse wurde über eine Entlüftung Feuchtigkeit abgezogen. In einer Loch-Düse wurden 4 Stränge ausgeformt, die anschließend in einem Wasserbad abgekühlt und mit einem Stranggranulator granuliert wurden.

Abbildung 2 zeigt den im Beispiel 5 verwendeten Extruderaufbau zur Herstellung des Kohlenstoffnanoröhrchen-Polyethylen-HDPE Composites ohne sich darauf zu begrenzen.

Die Dispergiergüte der Kohlenstoffnanoröhrchen im Endprodukt wurde mittels Confokaler Laser Scanning Mikroskopie (CLSM) mit Fluoreszenzkontrast (Confocal Laser Scanning Microscope (CLSM) Leica TCS SP2) bestimmt. Kohlenstoffnanoröhrchen-Agglomerate erscheinen auf CLSM-Bildern als schwarze Partikel, da sie nicht fluoreszieren. Abbildung 3 zeigt Anschnitte zweier Granulate. Man erkennt keine schwarzen Partikel, was bedeutet, dass die Kohlenstoffnanoröhrchen vollständig dispergiert vorliegen und keine undispergierten Partikel vorhanden sind.

## Patentansprüche

1. Verfahren zur Herstellung von Kohlenstoffnanoröhrchen-Polymer-Mischungen bzw. Kohlenstoffnanoröhrchen-Kautschuk-Mischungen durch eine in-situ Gasphasenpolymerisation, **dadurch gekennzeichnet, dass** ein Gas bestehend aus Ethylen, Propylen, Buten, Butadien, Isopren und/oder Norbornen in Gegenwart von auf den Kohlenstoffnanoröhrchen geträgerten Katalysatoren bei Temperaturen im Bereich von 0 bis 300°C zu vorgenannten Kohlenstoffnanoröhrchen-Polymer-Mischungen bzw. Kohlenstoffnanoröhrchen-Kautschuk-Mischungen umgesetzt wird.

2. Verfahrens nach Anspruch 1, **dadurch gekennzeichnet, dass** die Kohlenstoffnanoröhrchen physikalisch oder chemisch behandelt sind.

3. Verfahrens nach einem der Ansprüche 1 oder 2, **dadurch gekennzeichnet, dass** die Kohlenstoffnanoröhrchen einen Anteil an aciden Gruppen von 50-10000 mäq/g Kohlen stoffnanoröhrchen aufweisen.

4. Verfahren nach einem der Ansprüche 1 bis 3, **dadurch gekennzeichnet, dass** mindestens ein Cokatalysator eingesetzt wird.

5. Verfahren nach Anspruch 4, **dadurch gekennzeichnet, dass** im Vergleich zum Katalysator ein Überschuss an Cokatalysator, insbesondere ein molares Verhältnis Cokatalysator/Katalysator von 10-500 eingestellt.

6. Verfahren nach einem der Ansprüche 4 oder 5, **dadurch gekennzeichnet, dass** mindestens ein Cokatalysator auf den Kohlenstoffnanoröhrchen geträgert ist.

7. Verfahren nach einem der Ansprüche 4 bis 6, **dadurch gekennzeichnet, dass** der Cokatalysatoranteil bezogen auf Gesamtmasse 0,01-15 Gew.% beträgt.

## Claims

1. Process for preparing carbon nanotube-polymer mixtures or carbon nanotube-rubber mixtures by an in situ gas-phase polymerization, **characterized in that** a gas consisting of ethylene, propylene, butene, butadiene, isoprene and/or norbornene is converted in the presence of catalysts supported on the carbon nanotubes at temperatures in the range from 0 to 300°C to give aforementioned carbon nanotube-polymer mixtures or carbon nanotube-rubber mixtures.

2. Process according to Claim 1, **characterized in that** the carbon nanotubes have been treated physically or chemically.

3. Process according to either of Claims 1 and 2, **characterized in that** the carbon nanotubes have a proportion of acidic groups of 50-10 000 meq/g of carbon nanotubes.

4. Process according to any of Claims 1 to 3, **characterized in that** at least one cocatalyst is used.

5. Process according to Claim 4, **characterized in that** an excess of cocatalyst is established compared to the catalyst, especially a molar cocatalyst/catalyst ratio of 10-500.

6. Process according to either of Claims 4 and 5, **characterized in that** at least one cocatalyst has been supported on the carbon nanotubes.

7. Process according to any of Claims 4 to 6, **characterized in that** the cocatalyst content based on overall composition is 0.01-15% by weight.

## Revendications

1. Procédé de préparation de mélanges de nanotubes de carbone-polymère ou de mélanges de nanotubes de carbone-caoutchouc par polymérisation en phase gazeuse in situ, **caractérisé en ce qu'**on transforme un gaz constitué d'éthylène, de propylène, de butène, de butadiène, d'isoprène et/ou de norbornène en présence de catalyseurs supportés sur les nanotubes de carbone à des températures dans la plage de 0 à 300°C en mélanges de nanotubes de carbone-polymère ou en mélanges nanotubes de carbone-caoutchouc susmentionnés.

2. Procédé selon la revendication 1, **caractérisé en ce que** les nanotubes de carbone sont traités physiquement ou chimiquement.

3. Procédé selon l'une quelconque des revendications 1 ou 2, **caractérisé en ce que** les nanotubes de carbone présentent une proportion de groupes acides de 50-10 000 méq/g de nanotubes de carbone.

4. Procédé selon l'une quelconque des revendications 1 à 3, **caractérisé en ce qu'**on utilise au moins un cocatalyseur.

5. Procédé selon la revendication 4, **caractérisé en ce qu'**on règle un excès de cocatalyseur par rapport au catalyseur, en particulier un rapport molaire cocatalyseur/catalyseur de 10-500.

6. Procédé selon l'une quelconque des revendications 4 ou 5, **caractérisé en ce qu'**au moins un cocatalyseur est supporté sur les nanotubes de carbone.

7. Procédé selon l'une quelconque des revendications 4 à 6, **caractérisé en ce que** la proportion de cocatalyseur par rapport à la masse totale est de 0,01-15% en poids.
